# EUROPEAN PATENT APPLICATION

(11) **EP 4 575 467 A1**
(43) Date of publication of application: **25.06.2025**
(21) Application number: 23219578.4
(22) Date of filing: 22.12.2023
(51) Int. Cl.: G01N 21/64

(54) **TECHNIQUES FOR ILLUMINATION AND DETECTION IN ANALYTICAL ANALYZERS**

(71) Applicant: F. Hoffmann-La Roche AG, 4070 Basel (CH); Roche Diagnostics GmbH, 68305 Mannheim (DE)
(72) Inventor: WIETZORREK, Joachim, 6343 Rotkreuz ZG (CH)
(74) Representative: Peterreins Schley

(57) **Abstract**

In one general aspect, the present disclosure relates to an analytical analyzer (100) including a sample support (107) defining a sample area, an illumination assembly (109) configured to illuminate the sample area with illumination light (9), a matrix detector (6) and a detection assembly (111) configured to image light (7) emitted from the sample area onto the matrix detector (6). The analytical analyzer (100) further includes a field lens array (18) including a plurality of field lens elements (202) arranged over the sample area so that the illumination light (9) and the light (7) emitted from the sample traverses through the field lens array (18) and an opaque grid (103) arranged to cover the edges of each of the plurality of field lens elements (202).

## Description

### Technical Field

This disclosure relates to analytical analyzers including illumination and detection assemblies and techniques for improving the homogeneity of illumination of a sample in an analytical analyzer.

### Background

Analytical analyzers configured to perform real-time monitoring of PCR ("polymerase chain reaction") play a more and more important role in diagnostic, forensic and research environments. These analytical analyzers frequently include an illumination assembly configured to illuminate a sample area supporting multiple samples (e.g., a multi-well plate including a plurality of sample wells). Depending on the concentration of certain analytes in the samples, the samples emit light which is captured by a detection assembly of the analytical analyzer. The detection assembly images the different samples on a matrix detector (e.g., a CCD detector). In this manner, a multitude of samples can be monitored in parallel. The geometric arrangement of the samples (e.g., in wells of the multi-well plate) frequently fills the sample area with a fill factor (considerably) smaller than one. In other words, the sample area includes sub-areas between the samples not containing samples. The illumination assembly also illuminates these sub-areas. This can result in a considerable fraction of the illumination light being lost.

Moreover, it can be necessary to add a component on a multi well plate (or on another sample support), e.g., a heating lid to heat a sealing foil of the multi-well plate to avoid formation of condensed water on the sealing foil which can interfere with the illumination and or detection process. This additional component might also block a considerable fraction of the illumination light and/or the emitted light.

To address these problems, adding an optical assembly including a field lens array and a pupil lens array has been proposed (see, e.g., US 7,906,767 B2). This optical assembly can redistribute the illumination light so that a (much) higher fraction of the illumination light is guided to the sub-areas holding samples (e.g., the wells of the multi-well plate) and/or collect emitted light over a larger spatial angle. In addition, the optical assembly can guide the illumination light through openings in the added component. As a result, both the excitation and the collection efficiencies of the analyzer can be enhanced in some examples. However, adding the optical assembly may, in some instances, generate new issues. The techniques of the present disclosure seek to address these issues.

### Summary

In a first general aspect, the present disclosure relates to an analytical analyzer including a sample support defining a sample area, an illumination assembly configured to illuminate the sample area with illumination light, a matrix detector and a detection assembly configured to image light emitted from the sample area onto the matrix detector. The analytical analyzer further includes a field lens array including a plurality of field lens elements arranged over the sample area so that the illumination light and the light emitted from the sample traverses through the field lens array. The analytical analyzer further includes an opaque grid arranged to cover the edges of each of the plurality of field lens elements.

In a second general aspect, the present disclosure relates to a method for improving the homogeneity of illumination of a sample area in an analytical analyzer, the analytical analyzer comprising a sample support defining the sample area, an illumination assembly configured to illuminate the sample area with illumination light, a matrix detector, a detection assembly configured to image light emitted from the sample area onto the matrix detector, and a field lens array including a plurality of field lens elements arranged over the sample support so that the illumination light and the light emitted from the sample traverses through the field lens array. The method comprises arranging an opaque grid to cover the edges of each of the plurality of field lens elements.

The techniques of the first and second general aspects can have the following advantageous effects in some implementations.

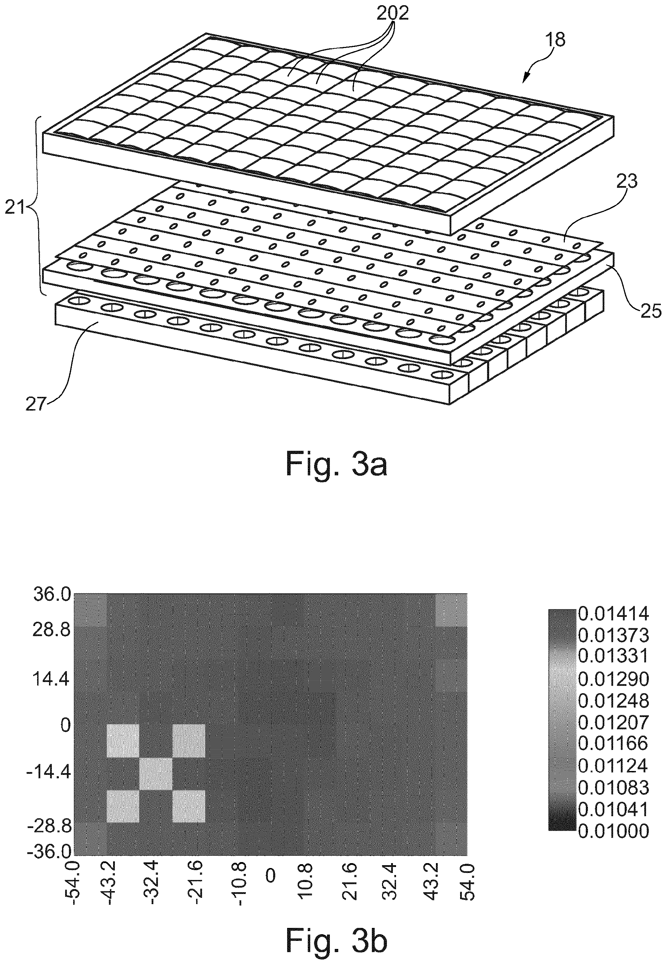

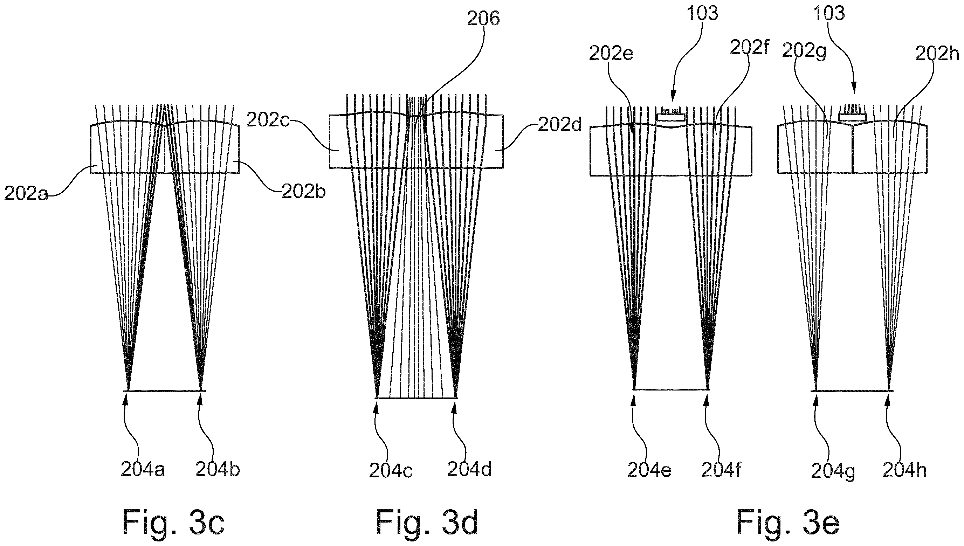

The inventor of the present disclosure has recognized that by arranging an opaque grid over the edges of field lens elements in an illumination (and possibly also in a detection) path of the analytical analyzer, the uniformity of the illumination over the sample area (e.g., between the multiple sample positions of the sample area) can be enhanced compared to some known solutions. In some known solutions using a field lens array including a plurality of field lens elements, the multiple field lens elements abut to form the field lens array. The actual arrangement of the field lens array can deviate from an ideal field lens array due to various reasons. For example, the multiple field lens elements might have (slightly) different shapes. In addition or alternatively, the alignment of the multiple field elements might be imperfect (e.g., forming gaps and/or steps between field lens elements). In addition or alternatively, when the field lens elements are formed as part of a single component (e.g., by molding or surface processing techniques), the areas in which the field lens abut can deviate from the intended lens shape(s) (compare the ideal lens shapes in FIG. 3C and the lens shapes with imperfections in FIG. 3D). These errors can reduce the uniformity of illumination over the sample area. FIGs. 3A and 3B show a field lens array in which a subset of field lens elements (being arranged as the dots indicating the number five on a die) deviate form an ideal shape or position. It can be seen that the intensity of the illumination drops for the sections of the sample area these field lens elements are designed for.

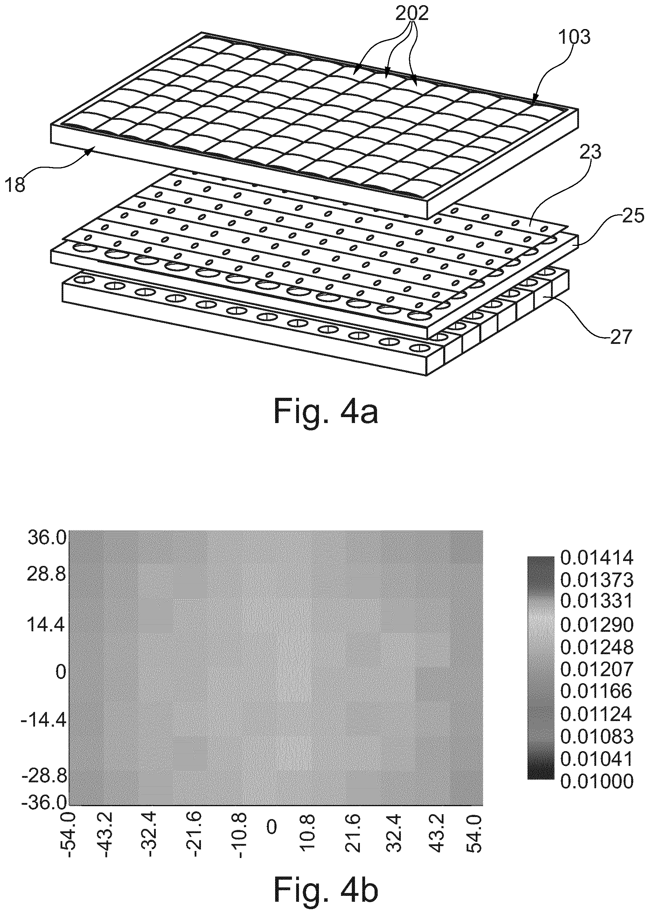

This lack of homogeneity can pose a challenge to various workflows of analytical analyzers. For some applications (e.g., parallel monitoring PCR at a plurality of sample positions) an inhomogeneous illumination can result in lacking comparability between signals obtained from different positions of the sample area (e.g., different samples). This might cause problems or errors in the evaluation process of the obtained signals. The opaque grid of the present disclosure can address this inhomogeneity problem in some implementations. By masking the edges of the field lens elements, the problematic zones of the field lens elements no longer contribute to the illumination of the sample area. This means that the illumination intensity of some field lens elements (not exhibiting the above errors) is reduced to the illumination intensity of the imperfectly arranged and/or formed field lens elements. However, as a result, an illumination homogeneity of the analytical analyzer can be improved compared to an analytical analyzer not deploying an opaque grid. FIG. 4B shows the effect for the field lens array of FIG. 3A with an added opaque grid (as shown in FIG. 4A). As can be seen, a difference in intensity is approximately 30% between a sample position / sub-area having the highest intensity and a sample position / sub-area having the lowest intensity (i.e., belonging to one of the deficient field lens elements) without the opaque grid. After adding the opaque grid, a difference in between a sample position / sub-area having the highest intensity and a sample position / sub-area having the lowest intensity can be reduced to below 5%.

Also, advantageously, the opaque grid can be refurbished in existing analytical analyzers in some situations. For instance, the opaque grid can be added in some examples without changing and/or replacing the remaining elements of the analytical analyzer.

Certain terms are used in the present disclosure in a particular manner:

An "analytical analyzer" or short "analyzer" (the terms are used interchangeably in the present disclosure) according to the present disclosure is an - usually at least partially automated - apparatus dedicated to performing an analytical function. In some embodiments, the analytical devices or analyzers can be configured to carry out the analysis of samples (e.g., samples for in vitro diagnostics). For example, an analytical device can be a clinical diagnostics system for performing in-vitro diagnostics. In other examples (or in addition), the analytical device can be a system for performing forensic or research workflows. The analytical analyzer can determine a presence and/or a concentration of a particular substance in a sample.

The analytical analyzers of the present disclosure can have different configurations according to the need and/or according to the desired workflow. Additional configurations may be obtained by coupling a plurality of analyzers and/or modules together. A "module" is a work cell, typically smaller in size than the entire analytical analyzer, which has a dedicated function. This function can be analytical but can be also pre-analytical or post-analytical or it can be an auxiliary function to any of the pre-analytical function, analytical function or post-analytical function. In particular, a module can be configured to cooperate with one or more other modules for carrying out dedicated tasks of a sample processing workflow, e.g., by performing one or more pre- analytical and/or analytical and/or post-analytical steps.

In some examples, the analytical analyzers can be configured to perform and monitor PCR. In other words, the analytical analyzers may be PCR analyzers. In the other examples, the analytical analyzer can include analytical apparatuses for one or more of clinical chemistry, immunochemistry, coagulation, hematology, etc.

The analytical analyzer may comprise one analytical module (e.g., configured to monitor a PCR or for another analytical function), or a combination of any of such modules with respective workflows, where pre-analytical and/or post analytical modules may be coupled to individual analytical modules or be shared by a plurality of analytical modules. In alternative pre-analytical and/or post-analytical functions may be performed by units integrated in an analytical analyzer. The analytical device can comprise functional units such as liquid handling units for pipetting and/or pumping and/or mixing of samples and/or reagents and/or system fluids, and also functional units for sorting, storing, transporting, identifying, separating, detecting.

The term "sample" refers to a biological material suspected of containing one or more analytes of interest and whose detection, qualitative and/or quantitative, may be associated to a particular condition (e.g., a clinical condition).

The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The sample can be pretreated prior to use, such as preparing plasma from blood, diluting viscous fluids, lysis or the like; methods of treatment can involve filtration, centrifugation, distillation, concentration, inactivation of interfering components, and the addition of reagents. A sample may be used directly as obtained from the source in some cases or following a pretreatment and/or sample preparation workflow to modify the character of the sample, e.g. after adding an internal standard, after being diluted with another solution or after having being mixed with reagents e.g. to enable carrying out one or more in vitro diagnostic tests, or for enriching (extracting/separating/concentrating) analytes of interest and/or for removing matrix components potentially interfering with the detection of the analyte(s) of interest.

The term "sample" is used to indicate a sample before sample preparation whereas the term "prepared sample" is used to refer to samples after sample preparation. In non-specified cases the term "sample" may generally indicate either a sample before sample preparation or a sample after sample preparation or both. Examples of analytes of interest are sequences of DNA.

The term "light" in the present disclosure includes, but is not limited to, electromagnetic radiation in the visible spectrum (e.g., between 380 nm and 780 nm). Light also encompasses radiation in the ultraviolet (e.g., between 150 nm and 380 nm) and infrared spectrum (e.g., between 780 nm and 5 µm).

The expressions "for imaging" or "for generating an image" (or similar expressions) in the present disclosure mean that the components or devices take part in the process of imaging/generating an image. In other words, an image is created in the analytical analyzer (e.g., on a matrix detector of the analytical analyzer). The expressions do not confer that the respective components or devices in isolation must perform the imaging function (though this can be the case). For instance, a detection assembly for imaging takes part in the imaging process but there can be additional components (e.g., the field lens array) which also take part in the imaging process.

A field lens is - according to the general understanding of the term - a lens arranged at (or near) a field plane of an optical system, i.e., a plane conjugated to an object plane of the optical system (and the wave fronts of the light have approximately zero curvature).

A pupil lens is - according to the general understanding of the term - a lens arranged at (or near) a pupil plane of an optical system, i.e., a plane being an image plane of an aperture stop of the optical system.

### Description of the Drawings

FIG. 1 is a schematic drawing of an example analytical analyzer according to the present disclosure.
FIG. 2 is a schematic drawing of an example illumination and detection assembly of an analytical analyzer according to the present disclosure.
FIG. 3A is a close-up of a field lens array including a plurality of field lens elements according to the prior art.
FIG. 3B is a diagram of the illumination intensity over the sample area when employing a field lens array as shown in FIG. 3A.
FIG. 3C and FIG. 3D are schematic drawings of field lens elements of a field lens array having ideal (FIG. 3C) and imperfect (FIG. 3D) configurations.
FIG. 3E is a schematic drawing showing the field lens elements of FIG. 3D with an opaque grid according to the present description added.
FIG. 3F depicts the illumination intensity at a focus position of a field lens element with edges deviating from an ideal shape.
FIG. 3G depicts the illumination intensity at a focus position of a field lens element with edges deviating from an ideal shape with an opaque grid according to the present disclosure in place.
FIG. 4A is a close-up of a field lens array including a plurality of field lens elements and an opaque grid according to the present disclosure.
FIG. 4B is a diagram of the illumination intensity over the sample area when employing a field lens array as shown in FIG. 4A.
FIG. 5A is a first example of an opaque grid according to the present disclosure.
FIG. 5B is a second example an opaque grid according to the present disclosure.

### Detailed Description

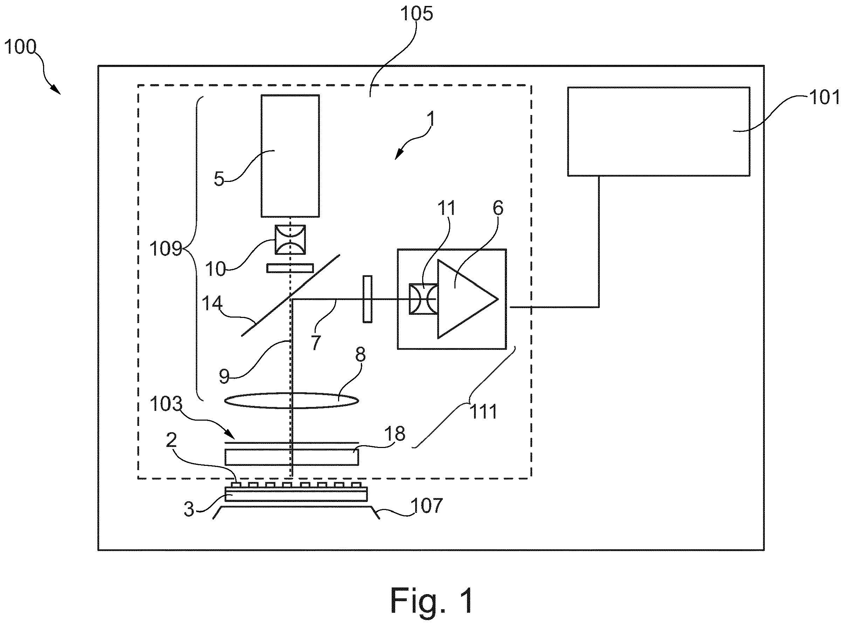

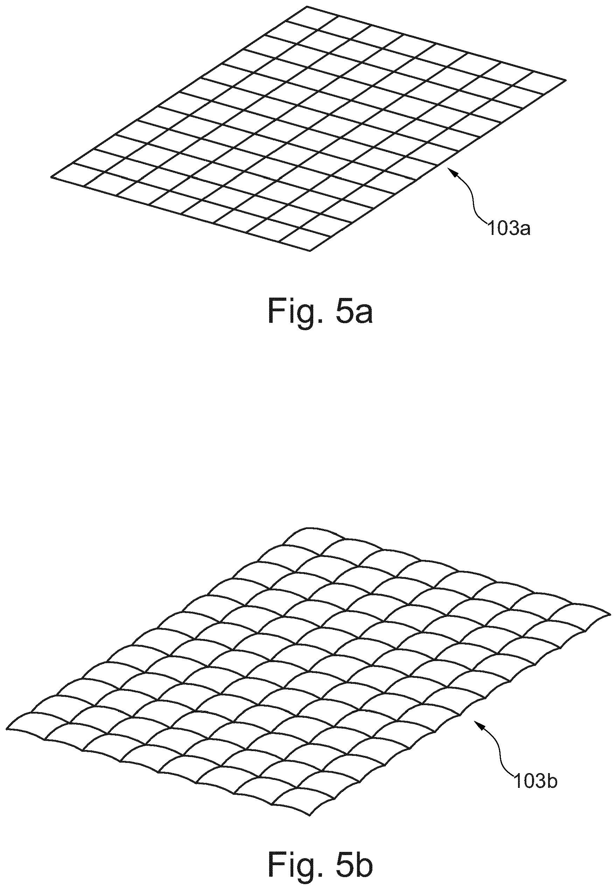

We will discuss aspects of an analytical analyzer according to the present disclosure first based on FIGs. 1, 2 and 4A and 4B. Particular aspects of the opaque grids of the present disclosure will be subsequently discussed based on FIG. 5A and 5B.

FIG. 1 is a schematic drawing of an example analytical analyzer 100 according to the present disclosure. The analytical analyzer includes an analytical module 105 housing the components for performing an analytical function The analytical analyzer includes a sample support 107 defining a sample area. The sample area can extend in two dimensions (e.g., over more than 1 cm or more than 5 cm in either dimension). Alternatively or in addition, the sample area can be planar (e.g., a top surface of the sample area can be planar, the sample area also extending in a direction perpendicular to the planar top surface). In some examples, the sample area defines a plurality of sample positions (which can be monitored in parallel by the analytical analyzer 100). The sample area can define more than 10 sample positions (e.g., more than 50 sample positions). The sample support 107 can be configured to support a sample carrier 3. In some examples, the sample carrier 3 includes a plurality of sample receptacles (e.g., sample vessels), each sample receptacle configured to hold a sample. For instance, the sample carrier 3 can be a multi-well plate (where each well defines a sample position in the sample area).The sample carrier 3 can be composed of multiple elements (each configured to define one or more sample positions) in some examples.

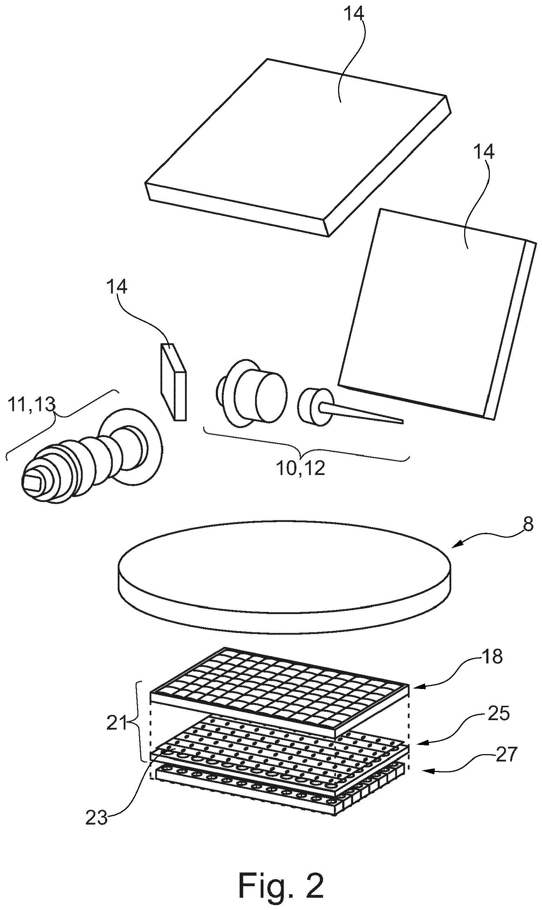

The analytical analyzer further include an illumination assembly 109 configured to illuminate the sample area with illumination light 9 (indicated in broken lines in FIG. 1). The illumination assembly 109 can have any suitable arrangement to illuminate the sample area (i.e., the particular components shown in FIG. 1 and FIG. 2 are only exemplary).

The analytical analyzer further includes a matrix detector 6 and a detection assembly 111 configured to image light 7 emitted from the sample area onto the matrix detector 6 (the emitted light 7 is indicated by a solid line in FIG. 1). The detection assembly 111 can have any suitable arrangement to image light emitted from the sample area (again, the particular components shown in FIG. 1 and FIG. 2 are only exemplary). In some examples, the detection assembly 111 is configured to image a plurality of sample positions distributed over the sample area (e.g., an array of sample positions is imaged onto different areas of the matrix detector 6. The matrix detector 6 can be a CMOS-detector or a CCD-detector in some examples.

In some examples, the illumination assembly 109 and the detection assembly 111 are arranged in an epi-arrangement (i.e., the illumination light impinges on the sample area and the light emitted from the sample area is captured on/from the same side of the samples area). For some applications, an epi-illumination can be advantageous as the requirements for blocking the (usually much more intense) excitation light in the detection assembly can be relaxed compared to trans-illumination arrangements in some examples. In other examples, the illumination assembly 109 and the detection assembly 111 are arranged in a trans-arrangement (i.e., the illumination light impinges on the sample area and the light emitted from the sample area is captured on/from opposite sides of the samples area).

The analytical analyzer 100 further includes a field lens array 18 including a plurality of field lens elements arranged over the sample area so that the illumination light 9 and the light 7 emitted from the sample traverse through the field lens array 18. In other words, the field lens array 18 is arranged between the remaining parts of the illumination assembly 109 and the sample area. In some examples, the field lens array can be arranged within 10 cm (e.g., within 5 cm) from the sample area (measured in a normal direction from a top surface the sample area facing the illumination assembly 109).

The analytical analyzer 100 further includes an opaque grid 103 arranged to cover the edges of each of the plurality of field lens elements. The opaque grid 103 can include a plurality of extended portions or struts forming a lattice. In some examples, each extended portion or strut is shaped to cover two coextensive edges of neighboring field lens elements.

The opaque grid 103 is arranged over, or on, a surface of the field lens array 18 facing away from the sample area (i.e., the field lens array 18 defines two broad or extended surfaces, one facing the sample area and one facing away from the sample area, the opaque grid 103 being arranged on, or over, the latter broad or extended surface). In other words, the illumination light first traverses the opaque grid 103, then the field lens array 18 and thereafter impinges on the sample area. In other examples, the opaque grid can be arranged over, or on, a surface of the field lens array 18 facing the sample area.

The opaque grid 103 can be arranged not further than 1 cm away from a surface of the field lens array 18 the opaque grid 103 is arranged over, or on, (regardless if the surface is a surface facing or facing away from the sample area).

By being arranged in this manner, the opaque grid 103 can block a fraction of the illumination light which would impinge on the sample area if the opaque grid 103 was absent. In some examples, the opaque grid blocks less than 30% by energy of the illumination light (which would impinge on the sample area if the opaque grid 103 was absent).

As described above, a uniformity of the illumination light 9 at the sample area can be higher with the opaque grid 103 in place than without the opaque grid 103 in place (all other elements of the analytical analyzer 100 remaining unchanged). Fig. 4B shows an example diagram of the light intensity at the sample area with an opaque grid 103 in place compared to Fig. 3B which shows the same diagram without the opaque grid 103 in place.

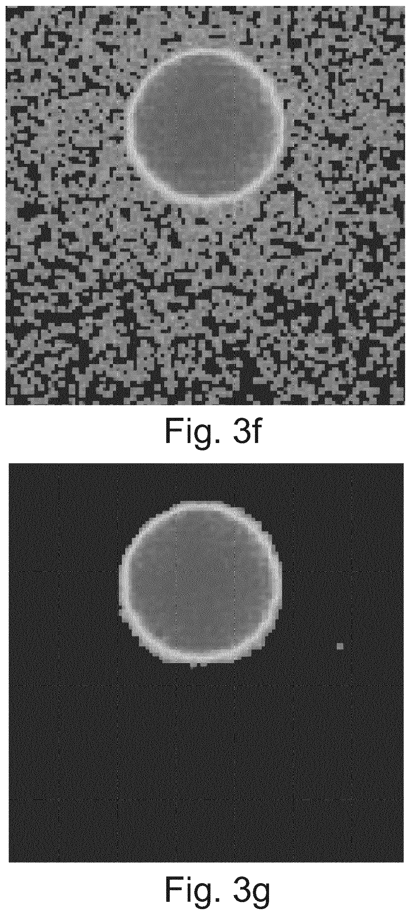

FIGS. 3C to 3E illustrate the operation of the opaque grid according to the present disclosure. FIG. 3C is a schematic drawing of field lens elements 202a, 202b of a field lens array having ideal configurations. As can be seen the entire illumination light impinging on the field lens elements 202a, 202b is guided to a respective focus position 204a, 204b on (or near) a pupil plane of the system. FIG. 3D is a schematic drawing of field lens elements 202c, 202d of a field lens array having an imperfect configuration. The area where the two field lens elements 202c, 202d abut deviates from the ideal shape of the field lens elements. For instance, the curvature of the surface of the field lens elements 202c, 202d can deviate from an ideal curvature (e.g., as a result of a fabrication process of the field lens array). As depicted in FIG. 3D, illumination light impinging on the imperfect area 206 is not guided to the respective focus position 204c, 204d. FIG. 3F depicts the illumination intensity at a focus position 204c, 204d of a field lens element 202c, 202d with edges deviating from an ideal shape. As can be seen, a substantive amount of light is dispersed in areas spaced apart from the actual focus position. This light can be blocked by stops or openings in the light paths (e.g., diaphragms as described below in connection with FIG. 2 or another component of an optics assembly configured to guide illumination light to sample positions on the sample area). This light is lost for illumination of the sample area and hence reduces the illumination efficiency.

FIG. 3E is a schematic drawing showing field lens elements 202e-h of a field lens array having ideally 202e,f and imperfectly 202g.h shaped and/or arranged field lens elements. An opaque grid 18 is additionally present in FIG. 3E. The opaque grid 18 can be sized and arranged to cover the edges of the field lens elements 202e-h. As a result, illumination light that would have impinged on the edges of the field lens elements 202e-h is blocked. This means that rays leading to the difference in homogeneity in illumination of focus locations 204e-h are blocked. In this manner, a uniformity of the illumination intensity between the focus positions 204e-h of the field lens array is increased. FIG. 3G depicts the illumination intensity at a focus position 204g of a field lens element 202g with edges deviating from an ideal shape with an opaque grid according to the present disclosure in place. The stray rays seen in FIG. 3F are blocked.

Returning to FIG: 1, the analytical analyzer 100 can further include a controller 101 configured (e.g., programmed) to control operations of the analytical analyzer 100 (e.g., monitoring the light emitted from the sample area). In some examples, the controller 101 can be configured (e.g., programmed) to instruct the analytical analyzer 100 to carry out a monitoring workflow for a PCR (e.g., a real time monitoring of a PCR).

FIG. 4A is a close-up of a field lens array 18 including a plurality of field lens elements 202 and an opaque grid 103 according to the present disclosure. In this example, the field lens elements 202 have a rectangular footprint (i.e., in the plane perpendicular to the main optical axis of the respective field lens element 202). Accordingly, the opaque grid forms a plurality of lines arranged in rows and columns over the rows and columns formed by the edges of the plurality of field lens elements. The plurality of field lens elements can also have other footprints and/or can be arranged in other patterns in alternative examples (e.g., in honeycomb pattern). The opaque grid can be formed to cover the edges of these alternative field lens elements (e.g., in a honeycomb pattern as well).

We will discuss particular configurations of the opaque grid subsequently based on FIG. 5A and FIG. 5B. The opaque grid can be dimensioned and made of a material so that substantially no illumination light generated by the illumination assembly traverses the opaque grid and impinges on the sample area (e.g., more than 99% of the impinging light by energy is blocked by the opaque grid). The opaque grid can include (e.g., consist of) any material capable of blocking (e.g., absorbing) the illumination light. For instance, the opaque grid can include a metal structure (e.g., coated with a light-absorbing coating) or a polymer structure.

In some examples, the opaque grid extends for less than 1 mm (e.g., less than 0.5 mm) over the edge of a respective field lens element 202 in a direction measured perpendicularly to the covered edge of the respective field lens element 202. In some examples, the opaque grid is formed of extended elements having a width of less than 2 mm (e.g., less than 1 mm).

In some examples, the opaque grid is a sheet (e.g. formed by a sheet), where the sheet includes a cutout (or opening) for each of the field lens elements (e.g., a cutout or opening is arranged over the central portion of each field lens element). FIG. 5A shows an example of an opaque grid 103a being formed by a sheet e.g. by being cut out of a sheet of material. In these examples, the opaque grid can be planar. Opaque grids of this type can be formed by laser cutting or etching (e.g., using an etching technique employed for making aperture stops), or by any other suitable structuring technique. In other examples, an opaque grid can be fabricated by an additive layer manufacturing (ALM) technique e.g. selective laser sintering.

In other examples, the opaque grid can have a curved surface reproducing a curvature of a surface of the field lens array the opaque grid is arranged on. FIG. 5B shows an example opaque grid 103b having this configuration. In some examples, the opaque grid is formed by an opaque material deposited onto the field lens array, for example deposited on the edges of each of the plurality of field lens elements. For instance, the opaque material can be painted onto the field lens array or deposited on the field lens array by an evaporation process, or a suitable ALM (e.g. directed energy deposition) process. In this manner, the performance of the opaque grid can be improved as an alignment of the opaque grid and the field lens array can be simplified. Moreover, spacings between a surface of the field lens array and the opaque grid can be avoided (which might negatively affect the blocking performance in some situations).

In other examples, the opaque grid can be formed by a sheet (e.g. being cut out of a sheet of material) and also have a curved surface reproducing a curvature of a surface of the field lens array the opaque grid is arranged on.

We will now further explain the setup of the optical components of example analytical analyzers of the present disclosure. The illumination assembly 109 can include a light source 5 (e.g., a laser light source, an LED light source, a gas discharge light source or a combination of these light sources). Moreover, the illumination assembly 109 can include a plurality of optical components 8, 10 to focus the illumination light 9 onto the sample area. Likewise, the detection assembly 111 can include a plurality of optical components 8, 11 configured to image the light emitted from the sample area onto the matrix detector 6. As can be seen in FIG. 1, the illumination assembly 109 and the detection assembly 111 can share one or more components (e.g., a field lens 8 - which is the last component of the illumination assembly 109 and the detection assembly 111 facing the sample area - is shared between the illumination assembly 109 and the detection assembly 111). In some examples, a path of the illumination light 9 and/or a path of the light 7 emitted from the sample is (are) folded one or multiple times by one or multiple folding mirrors 14 (one folding mirror 14 for the light 7 emitted from the sample is shown in Fig. 1). One of the one or multiple folding mirrors 14 can be configured as a dichroic mirror transparent for the illumination light 9 and reflective for the light 7 emitted from the sample (or vice versa in other examples). In addition or alternatively, the exit pupil of the illumination assembly 109 can be arranged laterally shifted compared to the entrance pupil of the detection assembly 111 in a lateral direction compared. This results in a skewness of the (chief) illumination rays. In both manners, the two light paths can be combined.

In some examples, the analytical analyzer 100 can have additional components arranged in the path(s) of the illumination light 9 and/or the light 7 emitted from the sample (e.g., arranged on or over the sample area). The additional component can include a plurality of openings transparent for the illumination light 9. The remaining surface of the additional component can be at least partially opaque to the illumination light 9. For instance, the analytical analyzer 100 can include a lid 2 arranged over the sample area. The lid can include a plurality of openings transparent for the illumination light 9 and the light 7 emitted from the sample. In some examples, the lid 2 can form a heating element (e.g., configured to heat a surface of a sample carrier 3 arranged on the sample support 107). For instance, the heating element can be arranged to avoid that condensed water forms over the sample area.

FIG. 2 is a schematic drawing of an example illumination and detection assembly of an analytical analyzer according to the present disclosure. Some of the elements have already been described in connection with FIG. 1. In the example of FIG. 2, the illumination assembly includes an optical components 8, 10 to focus the illumination light onto the sample area. The illumination assembly further includes a filter 12. The illumination light is folded by a plurality of folding mirrors. The detection assembly includes optical components 11 configured to image the light emitted from the sample area onto the matrix detector. The detection assembly further includes a filter 13 for the illumination light. We will subsequently further explain the optics design of example analytical analyzers.

In some examples, the field lens array 18 is part of an optics assembly 21 configured to guide the illumination light to a plurality of sample positions distributed over the sample area (e.g., wells of a multi-well plate). This can increase the amount of illumination light reaching the sample positions. In addition or alternatively, the optics assembly 21 can be configured to guide the illumination light through a plurality of openings formed by a component covering the sample area (e.g., the lid described previously). In some examples, the optics assembly 21 further (i.e., in addition to the field lens array 18) includes a diaphragm array of a plurality of diaphragms 23 and a pupil lens array of a plurality of pupil lenses 25. A diaphragm and a respective pupil lens are arranged between each of the field lens elements and the sample area. This arrangement can reduce a loss in illumination light and/or increase an amount of captured light emitted from the sample compared to a situation without the optics assembly 21 when an additional component covering the sample area having holes (e.g., a lid) is present in the light path(s).

The configuration of an example optics assembly 21 is explained in more detailed subsequently. The optics assembly 21 can form an array of objectives, each objective guiding illumination light to a different sample position in the sample area (e.g., a particular well of a multi well plate). The field lens array 18 faces the field lens 8 and the pupil lens array 25 faces the sample area. The field lens array 18 is arranged parallel to the pupil lens array 25. The analytical analyzer thus has a number of optical channels, the number corresponding to the number of sample positions. Each optical channel comprises a dedicated field lens element 20 and a dedicated pupil lens element. An object plane of each objective formed can be the top surface of the sample area and/or the underside of an additional component 27 covering the sample area (e.g., a lid as described above). This object plane can form a field plane, the field plane conjugated thereto lying in the respective field lens array element 18 (i.e., on the surface of the field lens array element which faces away from the respective pupil lens array element). The field planes of the field lens 8 or of the field lens array element 20 and of the samples area/additional component 27 covering the sample area remain conjugated to one another even when the optics assembly 21 is added to the remaining elements of the detection assembly 111. In other words, the field lens 8 is an integral part of the detection system 111 (and of the illumination assembly 109). The detection system 111 including the field lens 8 forms an image of the upper side of the field lens array 18 on the matrix detector 6 (not the field lens 8 alone). This applies correspondingly to the illumination assembly 109. In some examples, three field planes of the detection assembly 111 are located at the matrix detector 6, at the field lens array 18 (e.g., a top side of the field lens array), and the top side of the sample area. In addition or alternatively, three field planes of the illumination assembly are located at the light source 5, at the field lens array 18 (e.g., a top side of the field lens array), and the top side of the sample area (i.e., the latter two field planes can be identically located for the detection assembly 111 and the illumination assembly 109).

Each pupil lens array element of the pupil lens array 25 forms an image of a field lens array element 202 of the field lens array 18 on one sample position of the sample area and form a field plane there. At the field lens elements, chief rays of the illumination light run in parallel. In addition, chief rays of the light emitted from the samples run in parallel at the field lens elements. The arrangement is telecentric in this region. In some examples, the chief rays of the illumination light and the chief rays of the light emitted from the samples can run at an angle (e.g., the chief rays of the light emitted from the sample are perpendicular to the field lens array while the chief rays of the illumination light are skewed). The arrangement can still be telecentric in this region. The field lens elements of the field lens array 18 generate illumination pupils for the illumination light 9 and detection pupils for the light emitted from the sample area. The optics assembly images fields (objects, images) as well as diaphragms (pupils). Further details of the optics assembly 21 (also labeled as "objective array" therein) are describe in US patent US 7,906,767 B2.

In some examples, the analytical analyzer 100 is configured for fluorescence imaging. In other words, the light emitted 7 from the sample area can be fluorescent light. The illumination and detection assemblies 109, 111 can be configured accordingly (e.g., the detection assembly can include respective filters to block illumination light).

As explained above, in some examples, the analytical analyzer is configured to monitor PCR. For instance, the analytical analyzer can include a thermal cycler configured to heat and cool samples in the sample area (e.g., wells of a multi well plate). The thermal cycler can include one or more Peltier elements to effect the heating and cooling (e.g., of a block supporting the sample wells). The matrix detector 6 can be controlled (e.g., by controller 101) to detect (fluorescent) light emitted from the sample area to monitor a PCR happening in the samples located in the sample area. Based on the detected signals, one or more parameters of an analyte of interest (e.g., a particular DNA sequence) can be monitored by the analytical analyzer.

In the example of FIG. 1 and FIG. 2, the field lens 8 of the illumination assembly 109 and detection assembly 111 and the field lens array 18 are separate components. In other examples, the field lens of the illumination assembly and detection assembly and the field lens array can be integrated in a single component. In other words, a single component can be arranged to have the functions of the field lens and the field lens array as described above. The single component can be equipped with an opaque grid as described above (i.e., an opaque grid can be arranged to cover the edges of each of a plurality of field lens elements of the combined field lens component). The remaining components of the analytical analyzer can be configured as described in connection with FIG. 1 or FIG. 2.

In the preceding sections, multiple optical components (e.g., field lens 8) have been described. Likewise, FIG. 1 and FIG. 2 depict optical components of an illumination assembly and a detection assembly. In some examples, the optical components can include a plurality of sub-components (e.g., the field lens can be formed by a plurality of single lenses). In addition or alternatively, the optical components can be formed by an array of sub-components.

The present disclosure also relates to a method for improving the homogeneity of illumination of a sample area in an analytical analyzer, the analytical analyzer comprising a sample support defining the sample area, an illumination assembly configured to illuminate the sample area with illumination light, a matrix detector, a detection assembly configured to image light emitted from the sample area onto the matrix detector, and a field lens array including a plurality of field lens elements arranged over the sample area so that the illumination light and the light emitted from the sample traverses through the field lens array. The method comprises arranging an opaque grid to cover the edges of each of the plurality of field lens elements. The analytical analyzer and/or the opaque grid can be configured as described above.

In some examples, the method can include refurbishing an analytical analyzer by adding the opaque grid. As described above, the remaining parts of the optical analyzer can remain unchanged when adding the optical grid. Therefore, the optical grid can be added by a comparatively light-weight intervention (e.g., in the field) in an existing analytical analyzer.

## Claims

1. An analytical analyzer (100) including:
a sample support (107) defining a sample area;
an illumination assembly (109) configured to illuminate the sample area with illumination light (9);
a matrix detector (6);
a detection assembly (111) configured to image light (7) emitted from the sample area onto the matrix detector (6),
a field lens array (18) including a plurality of field lens elements (202; 202g-h) arranged over the sample area so that the illumination light (9) and the light (7) emitted from the sample area traverses through the field lens array (18); and
an opaque grid (103; 10a; 103b) arranged to cover the edges of each of the plurality of field lens elements (202; 202g-h).

2. The analytical analyzer of claim 1, wherein the opaque grid (103) is arranged over or on a surface of the field lens array (18) facing away from the sample area.

3. The analytical analyzer of any one of claims 1 and 2, wherein the opaque grid (103a) is a sheet including a cutout for each of the field lens elements (202; 202g-h).

4. The analytical analyzer of any one of claims 1 to 3, wherein the opaque grid (103b) is formed by an opaque material deposited onto the field lens array (202; 202g-h).

5. The analytical analyzer of any one of claims 1 to 4, wherein the opaque grid (103; 103a; 103b) blocks less than 30% by energy of the illumination light (9).

6. The analytical analyzer of any one of claims 1 to 5, wherein the opaque grid (103; 103a; 103b) extends for less than 1mm over the edge of a respective field lens element (202; 202g-h) in a direction measured perpendicularly to the covered edge of the respective field lens element (202; 202g-h).

7. The analytical analyzer of any of claims 1 to 6, wherein the sample support (107) is configured to support an array of samples and wherein the analytical analyzer (100) is configured to image light (7) emitted from each sample in the array to a different position on the matrix detector (6).

8. The analytical analyzer of claim 7, wherein the sample support (107) is configured to support a multi well plate.

9. The analytical analyzer of any of claims 1 to 8, wherein the analytical analyzer (100) is configured for fluorescence imaging.

10. The analytical analyzer of any of claims 1 to 9, wherein the analytical analyzer (100) is configured to monitor PCR reactions.

11. The analytical analyzer of any one of claims 1 to 10, wherein the field lens array (18) is part of an optics assembly (21) configured to guide the illumination light (9) to a plurality of sample positions distributed over the sample area, optionally through a plurality of openings formed by a lid element arranged over the sample area.

12. The analytical analyzer of claim 11, wherein the optics assembly (21) further includes a plurality of diaphragms (23) and a plurality of pupil lenses, wherein a respective diaphragm (23) and a respective pupil lens are arranged between each of the field lens elements (202; 202g-h) and the sample area.

13. The analytical analyzer of any of claims 1 to 12, wherein a uniformity of the illumination light (9) at the sample area is higher with the opaque grid (103; 103a; 103b) in place than without the opaque grid (103; 103a; 103b).

14. The analytical analyzer of any of claims 1 to 13, wherein the illumination assembly (109) and the detection assembly (111) are arranged in an epi-arrangement.

15. A method for improving the homogeneity of illumination of a sample area in an analytical analyzer (100), the analytical analyzer comprising:
a sample support (107) defining the sample area;
an illumination assembly (109) configured to illuminate the sample area with illumination light (9);
a matrix detector (6);
a detection assembly (111) configured to image light (7) emitted from the sample area onto the matrix detector (6),
a field lens array (18) including a plurality of field lens elements (202; 202g-h) arranged over the sample area so that the illumination light (9) and the light (7) emitted from the sample traverses through the field lens array (18), the method comprising:
arranging an opaque grid (103; 103a; 103b) to cover the edges of each of the plurality of field lens elements (202; 202g-h).
